# EUROPEAN PATENT SPECIFICATION

(11) **EP 4 107 988 B1**
(45) Date of publication and mention of the grant of the patent: **07.01.2026**
(21) Application number: 21930623.0
(22) Date of filing: 23.04.2021
(51) Int. Cl.: H04W 28/02

(54) **METHOD, DEVICE AND COMPUTER PROGRAM PRODUCT FOR WIRELESS COMMUNICATION**
VERFAHREN, VORRICHTUNG UND COMPUTERPROGRAMMPRODUKT ZUR DRAHTLOSEN KOMMUNIKATION
PROCÉDÉ, DISPOSITIF ET PRODUIT PROGRAMME D'ORDINATEUR POUR LA COMMUNICATION SANS FIL

(43) Date of publication of application: 28.12.2022
(73) Proprietor: ZTE Corporation, Shenzhen, Guangdong 518057 (CN)
(72) Inventor: HAN, Jiren, Shenzhen, Guangdong 518057 (CN); GAO, Yin, Shenzhen, Guangdong 518057 (CN)
(74) Representative: Vossius & Partner Patentanwälte Rechtsanwälte mbB
(86) International application number: PCT/CN2021/089316
(87) International publication number: WO 2022/222140

(56) References cited:
- EP-A1- 3 809 730
- WO-A1-2020/199942
- CN-A- 106 249 750
- CN-A- 108 886 514
- CN-A- 111 066 342
- CN-A- 111 567 136
- US-A1- 2017 124 884
- US-A1- 2021 021 334
- US-A1- 2021 074 167
- US-A1- 2022 022 267

## Description

This document is directed generally to wireless communications.

An Unmanned Aerial System (UAS) is the combination of an Unmanned Aerial Vehicle (UAV), sometimes called a drone, and a UAV controller (UAVC). A UAV is generally an aircraft without a human pilot on board (but there may still be a human pilot on board in some cases). The UAV can be controlled from an operator via a UAV controller and has a range of autonomous flight capabilities.

UAVs range in size and weight from small, light aircraft often used for recreational purposes to large, heavy aircraft which are often more suited to commercial applications. Regulatory requirements vary across this range and vary on a regional basis.

EP 3 809 730 A1 is a related prior art document.

The present disclosure relates to methods, devices, and computer program products for wireless communication, which can allow UAV related information be transmitted between wireless communication nodes. The invention is specified by the independent claims. Preferred embodiments are defined in the dependent claims. The following aspects and implementation clauses in this section are provided for a better understanding of the invention which is solely defined by the appended claims.

One aspect of the present disclosure relates to a wireless communication method. In an embodiment, the wireless communication method includes: transmitting, by a first wireless communication node, unmanned aerial vehicle, UAV, related information of a UAV to a second wireless communication node, wherein the UAV related information comprises at least one of UAV Flight Path Information or UAV Height Information.

Another aspect of the present disclosure relates to a wireless communication method. In an embodiment, the wireless communication method includes: receiving, by a second wireless communication node, unmanned aerial vehicle, UAV, related information of a UAV from a first wireless communication node, wherein the UAV related information comprises at least one of UAV Flight Path Information or UAV Height Information; and transmitting, by the second wireless communication node, a response message in response to the UAV related information to the first wireless communication node.

Another aspect of the present disclosure relates to a wireless communication node. In an embodiment, the wireless communication node includes a communication unit and a processor. The processor is configured to transmit unmanned aerial vehicle, UAV, related information of a UAV to a second wireless communication node, wherein the UAV related information comprises at least one of UAV Flight Path Information or UAV Height Information.

Another aspect of the present disclosure relates to a wireless communication node. In an embodiment, the wireless communication node includes a communication unit and a processor. The processor is configured to: receive unmanned aerial vehicle, UAV, related information of a UAV from a first wireless communication node, wherein the UAV related information comprises at least one of UAV Flight Path Information or UAV Height Information; and transmit a response message in response to the UAV related information to the first wireless communication node.

Various embodiments may preferably implement the following features:
Preferably, the UAV Flight Path Information comprises at least one of way point location or time stamp information.

Preferably, the way point location comprises location coordinates of the UAV.

Preferably, the time stamp information comprises absolute time points.

Preferably, the UAV Height Information comprises information about a height of the UAV above a sea level.

Preferably, the first wireless communication node and the second wireless communication node are gNodeBs, and the UAV related information is transmitted to the second wireless communication node via an Xn interface.

Preferably, the UAV related information is transmitted to the second wireless communication node via a Next Generation Radio Access Network, NG-RAN, Configuration Update message, a Handover Request message, or a Retrieve user equipment, UE, Context Request message.

Preferably, the first wireless communication node is configured to receive a response message from to the second wireless communication node via a NG-RAN Configuration Acknowledge message, a Handover Request Acknowledge message, or a Retrieve UE Context Response message.

Preferably, the first wireless communication node is a gNodeB central unit, gNB-CU, and the second wireless communication node is a gNodeB distributed unit, gNB-DU, and the UAV related information is transmitted to the second wireless communication node via an F1 interface.

Preferably, the UAV related information is transmitted to the second wireless communication node via a gNB-CU Configuration Update message, a UE Context Setup Request message, or a UE Context Modification Request message.

Preferably, the first wireless communication node is configured to receive a response message from to the second wireless communication node via a gNB-CU Configuration Update Acknowledge message, or a UE Context Setup Response message, or a UE Context Modification Response message.

Preferably, the first wireless communication node and the second wireless communication node are gNodeBs, and the UAV related information is received via an Xn interface.

Preferably, the UAV related information is received via a Next Generation Radio Access Network, NG-RAN, Configuration Update message, or a Handover Request message, or a Retrieve user equipment, UE, Context Request message.

Preferably, the response message is transmitted via a NG-RAN Configuration Acknowledge message, or a Handover Request Acknowledge message, or a Retrieve UE Context Response message.

Preferably, the first wireless communication node is a gNodeB central unit, gNB-CU, and the second wireless communication node is a gNodeB distributed unit, gNB-DU, and the UAV related information is received via an F1 interface.

Preferably, the UAV related information is received via a gNB-CU Configuration Update message, or a UE Context Setup Request message, or a UE Context Modification Request message.

The present disclosure relates to a computer program product including a computer-readable program medium code stored thereupon, the code, when executed by a processor, causing the processor to implement a wireless communication method recited in any one of foregoing methods.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

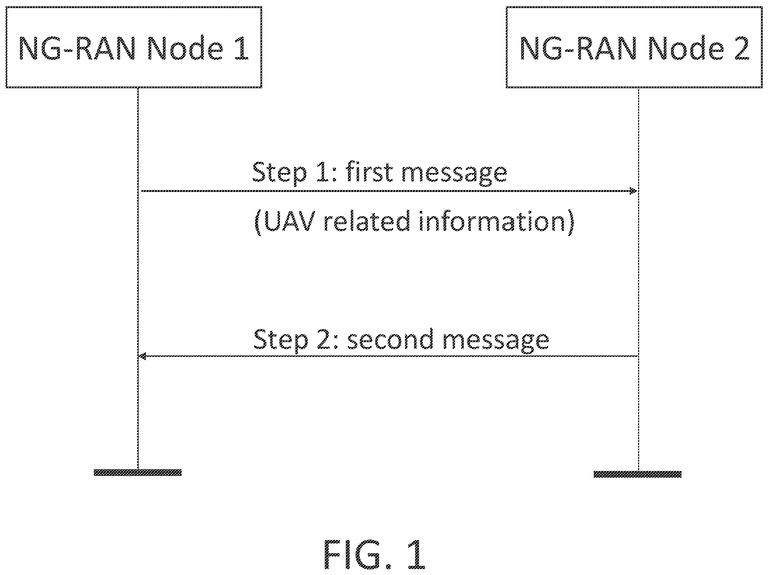

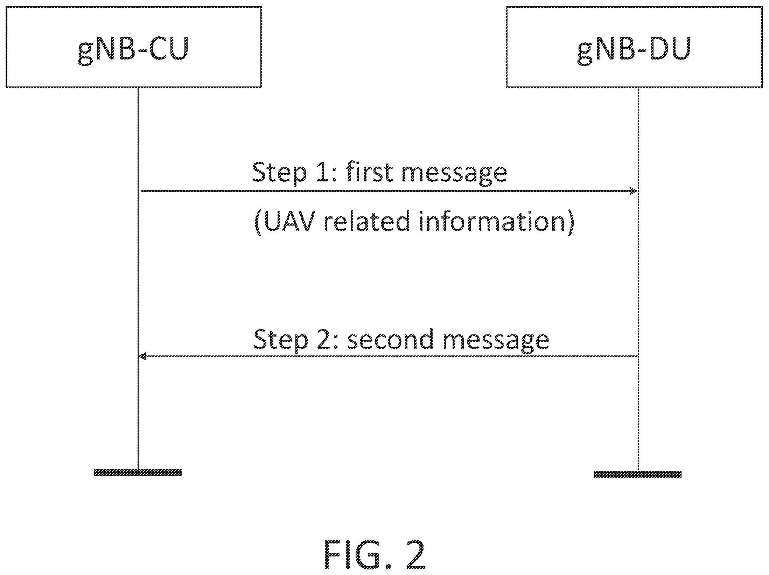

The above and other aspects and their implementations are described in greater detail in the drawings, the descriptions, and the claims. In the following, the invention is best understood in view of Figures 1, 2, 5 and 6. The remaining embodiments, aspects, or examples are included in order to help the reader better understand the invention.
FIG. 1 shows a schematic diagram of exchange of UAV related information between two NG-RAN nodes according to an embodiment of the present disclosure.
FIG. 2 shows a schematic diagram of transmission of UAV related information from gNB-CU to gNB-DU according to an embodiment of the present disclosure.
FIG. 3 shows an example of a schematic diagram of a wireless communication node according to an embodiment of the present disclosure.
FIG. 4 shows an example of a schematic diagram of another wireless communication node according to another embodiment of the present disclosure.
FIG. 5 shows a flowchart of a wireless communication method according to an embodiment of the present disclosure.
FIG. 6 shows a flowchart of another wireless communication method according to an embodiment of the present disclosure.

In new radio (NR), new architecture and new features of the base station are introduced. The NR base station can be also called gNB. The interface between the gNB and UAV is called Uu, while the interface between different gNBs is called Xn. In addition, the gNB can be split into two parts, i.e., the CU (Central Unit) and DU (Distributed Unit), and the interface between the gNB-CU and gNB-DU is called F1. In some embodiments, in an NR base station, there is only one gNB-CU, and one gNB-CU is able to control multiple gNB-DUs. The gNB can get the UAV information from the UAV via Uu.

In some approaches, the function of UAV has been introduced in NR. However, the detailed UAV related parameters and UAV information reporting procedures over different interfaces in the radio-access network (RAN) side are unclear.

In some aspects of the present disclosure, UAV related information and UAV information reporting/transmitting procedures are provided.

In some embodiments of the present disclosure, the UAV related information can comprise at least one of: Flight Path Information of a UAV or UAV Height Information of the UAV.

In some embodiments, the Flight Path Information can comprise at least one of the parameters: way point location or time stamp information. In some embodiments, the way point location is the form of the location coordinates. In some embodiments, the way point location includes location coordinates of the UAV. In some embodiments, the time stamp information includes absolute time information. For example, absolute time information can be in a format YY-MM-DD HH:MM:SS, in which YY indicates year, the former MM indicates month, DD indicates date, HH indicates hour, the latter MM indicates minute, and SS indicates second.

In some embodiments, the UAV height information includes information about the height of the UAV above the sea level.

In some embodiments, the RAN side (e.g., a gNB) can receive the UAV related information from the UAV, and the UAV related information can be exchanged over different RAN interfaces, including Xn and F1.

With the UAV related information, the gNB can evaluate the planned flight path of UAV and adjust the schedule of handover, including the cell handover, beam switching and multiple Transmission/Reception Points (TRP) switching.

In the description herein after, the sending node is referred to as the first node, the receiving node is referred to as the second node, the message transmitted from the first node to the second node is referred to as the first message, and the response message from the second node to the first node is referred to as the second message.

In some embodiments, the first message includes the UAV related information. The first node can comprise one of: gNB and gNB-CU, while the second node can comprise one of: gNB and gNB-DU.

### Embodiment 1: Exchange of UAV related Information between two NG-RAN Nodes

In this embodiment, both of the nodes are NG-RAN nodes, and the first message is Xn interface signaling. The first message can be but not limited to an NG-RAN Configurtion Update message, a Handover Request message, or a Retrieve UE Context Request message. The second message can be but not limited to an NG-RAN Configuration Acknowledge message, a Handover Request Acknowledge message, or a Retrieve UE Context Response message.

In step 1, the NG-RAN node 1 (i.e., the first node) sends the first message to the NG-RAN node 2 (i.e., the first node), which includes UAV related information. In this embodiment, the UAV related information is at least one of the UAV Flight Path Information or the UAV Height Information. In detail, the UAV Flight Path Information can comprise at least one of the parameters: way point location or time stamp information. To be more specific, the way point location is the form of the location coordinates, and the time stamp information is the absolute time information (in a format YY-MM-DD HH:MM:SS). The UAV height Information is information about the height of UAV above the sea level.

In step 2, the NG-RAN node 2 sends the second message to the NG-RAN node 1.

With such a procedure, the NG-RAN node 2 can obtain the UAV Flight Path Information from the NG-RAN node 1 and adjust the timing of the handover, including the cell handover, beam switching and multiple TRPs switching. In addition, the NG-RAN node 2 is able to optimize the measurement configuration to the UAV based on the UAV related information.

### Embodiment 2: Exchange of UAV Flight Path Information between gNB-CU and gNB-DU

In this embodiment, the first node is gNB-CU, the second node is gNB-DU and the first/second message is F1 interface signaling. In this embodiment, the first message can be but not limited to a gNB-CU Configuration Update message, a UE Context Setup Request message, or a UE Context Modification Request message. The second message can be but not limited to a gNB-CU Configuration Update Acknowledge message, a UE Context Setup Response message, or a UE Context Modification Response message.

Step 1: The gNB-CU sends the first message to the gNB-DU, which includes UAV related information, i.e. the UAV Fight Path information and UAV Height information. In this embodiment, the UAV Flight Path Information can comprise at least one of the parameters: way point location and time stamp information. To be more specific, the way point location is the form of the location coordinates, and the time stamp information is the absolute time information (in a format YY-MM-DD HH:MM:SS). The UAV height Information is information about the height of UAV above the sea level.

Step 2: The gNB-DU sends the second message to the gNB-CU.

With such a procedure, the gNB-DU can obtain the UAV Flight Path information from the gNB-CU and adjust the timing of the handover, including the cell handover, beam switching and multiple TRPs switching.

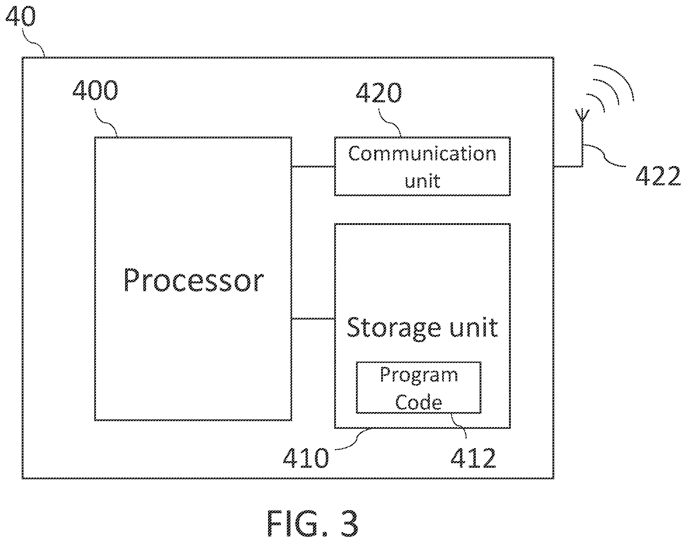

FIG. 3 relates to a schematic diagram of a wireless communication node 40 (e.g., a network device) according to an embodiment of the present disclosure. The wireless communication node 40 may be a satellite, a base station (BS) (e.g., a gNB), a unit of a BS (e.g., a gNB-CU), a network entity, a Mobility Management Entity (MME), Serving Gateway (S-GW), Packet Data Network (PDN) Gateway (P-GW), a radio access network (RAN), a next generation RAN (NG-RAN), a data network, a core network or a Radio Network Controller (RNC), and is not limited herein. In addition, the wireless communication node 40 may include (perform) at least one network function such as an access and mobility management function (AMF), a session management function (SMF), a user place function (UPF), a policy control function (PCF), an application function (AF), etc. The wireless communication node 40 may include a processor 400 such as a microprocessor or ASIC, a storage unit 410 and a communication unit 420. The storage unit 410 may be any data storage device that stores a program code 412, which is accessed and executed by the processor 400. Examples of the storage unit 412 include but are not limited to a SIM, ROM, flash memory, RAM, hard-disk, and optical data storage device. The communication unit 420 may be a transceiver and is used to transmit and receive signals (e.g., messages or packets) according to processing results of the processor 400. In an example, the communication unit 420 transmits and receives the signals via at least one antenna 422.

In an embodiment, the storage unit 410 and the program code 412 may be omitted. The processor 400 may include a storage unit with stored program code.

The processor 400 may implement any steps described in exemplified embodiments on the wireless communication node 40, e.g., via executing the program code 412.

The communication unit 420 may be a transceiver. The communication unit 420 may as an alternative or in addition be combining a transmitting unit and a receiving unit configured to transmit and to receive, respectively, signals, messages, or information to and from another wireless communication node or a UAV.

In some embodiments, the wireless communication node 40 may be used to perform the operations of the first node described above. In some embodiments, the processor 400 and the communication unit 420 collaboratively perform the operations described above. For example, the processor 400 performs operations and transmit or receive signals through the communication unit 420.

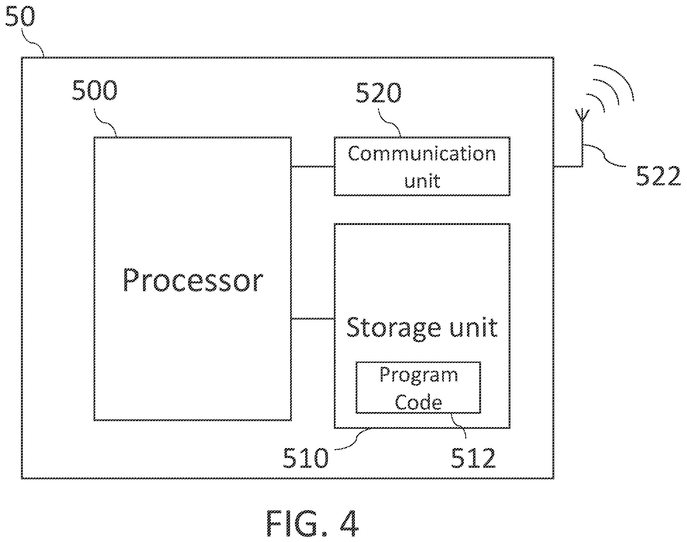

FIG. 4 relates to a schematic diagram of a wireless communication node 50 (e.g., a network device) according to an embodiment of the present disclosure. The wireless communication node 50 may be a satellite, a base station (BS) (e.g., a gNB), a unit of a BS (e.g., a gNB-DU), a network entity, a Mobility Management Entity (MME), Serving Gateway (S-GW), Packet Data Network (PDN) Gateway (P-GW), a radio access network (RAN), a next generation RAN (NG-RAN), a data network, a core network or a Radio Network Controller (RNC), and is not limited herein. In addition, the wireless communication node 50 may include (perform) at least one network function such as an access and mobility management function (AMF), a session management function (SMF), a user place function (UPF), a policy control function (PCF), an application function (AF), etc. The wireless communication node 50 may include a processor 500 such as a microprocessor or ASIC, a storage unit 510 and a communication unit 520. The storage unit 510 may be any data storage device that stores a program code 512, which is accessed and executed by the processor 500. Examples of the storage unit 512 include but are not limited to a SIM, ROM, flash memory, RAM, hard-disk, and optical data storage device. The communication unit 520 may be a transceiver and is used to transmit and receive signals (e.g., messages or packets) according to processing results of the processor 500. In an example, the communication unit 520 transmits and receives the signals via at least one antenna 522.

In an embodiment, the storage unit 510 and the program code 512 may be omitted. The processor 500 may include a storage unit with stored program code.

The processor 500 may implement any steps described in exemplified embodiments on the wireless communication node 50, e.g., via executing the program code 512.

The communication unit 520 may be a transceiver. The communication unit 520 may as an alternative or in addition be combining a transmitting unit and a receiving unit configured to transmit and to receive, respectively, signals, messages, or information to and from another wireless communication node or a UAV.

In some embodiments, the wireless communication node 50 may be used to perform the operations of the second node described above. In some embodiments, the processor 500 and the communication unit 520 collaboratively perform the operations described above. For example, the processor 500 performs operations and transmit or receive signals through the communication unit 520.

A wireless communication method is also provided according to an embodiment of the present disclosure. In an embodiment, the wireless communication method may be performed by using a wireless communication node (e.g., a gNB or a gNB-CU). In an embodiment, the wireless communication terminal may be implemented by using the wireless communication node 40 described above, but is not limited thereto.

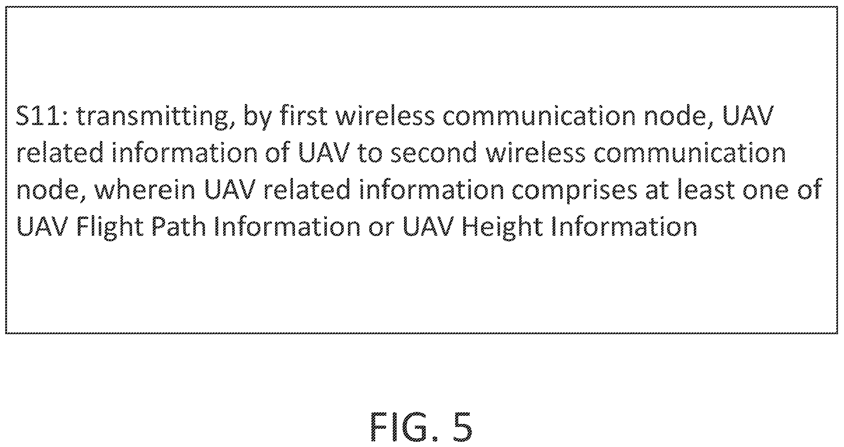

Referring to FIG. 5, in an embodiment, the wireless communication method includes: transmitting, by a first wireless communication node, unmanned aerial vehicle, UAV, related information of a UAV to a second wireless communication node, wherein the UAV related information comprises at least one of UAV Flight Path Information or UAV Height Information (S11).

Details in this regard can be ascertained with reference to the paragraphs above, and will not be repeated herein.

Another wireless communication method is also provided according to an embodiment of the present disclosure. In an embodiment, the wireless communication method may be performed by using a wireless communication node (e.g., a gNB or a gNB-DU). In an embodiment, the wireless communication terminal may be implemented by using the wireless communication node 50 described above, but is not limited thereto.

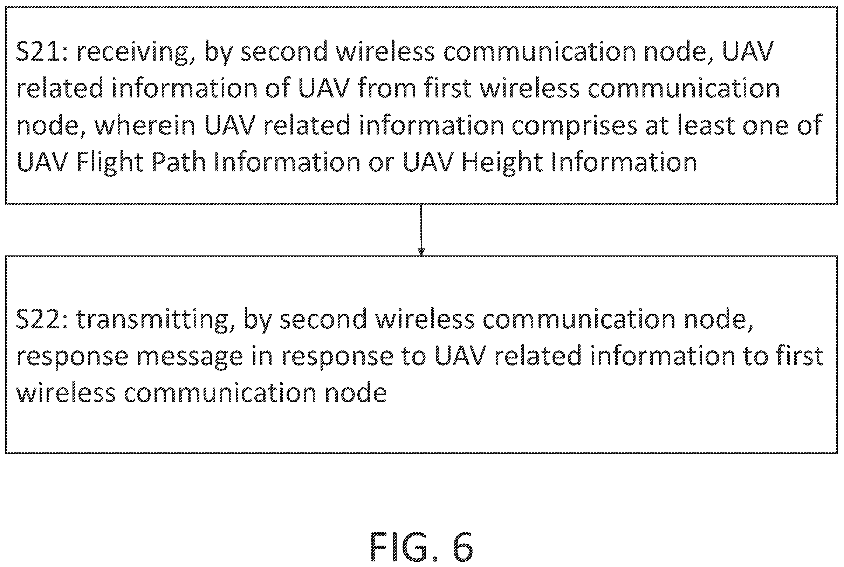

Referring to FIG. 6, in an embodiment, the wireless communication method includes: receiving, by a second wireless communication node, unmanned aerial vehicle, UAV, related information of a UAV from a first wireless communication node, wherein the UAV related information comprises at least one of UAV Flight Path Information or UAV Height Information (S21); and transmitting, by the second wireless communication node, a response message in response to the UAV related information to the first wireless communication node (S22).

In an embodiment, the response message can be the second message described above.

Details in this regard can be ascertained with reference to the paragraphs above, and will not be repeated herein.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A wireless communication method, for use in New Radio, NR, comprising:
transmitting, by a first wireless communication node, unmanned aerial vehicle, UAV, related information of a UAV to a second wireless communication node, wherein the UAV related information comprises at least one of UAV Flight Path Information or UAV Height Information,
wherein the first wireless communication node and the second wireless communication node are gNodeBs, and the UAV related information is transmitted to the second wireless communication node via an Xn interface;
wherein the UAV related information is transmitted to the second wireless communication node via a NG-RAN Configuration Update message or a Retrieve UE Context Request message;
wherein the first wireless communication node is configured to receive a response message from to the second wireless communication node via a NG-RAN Configuration Acknowledge message or a Retrieve UE Context Response message.

2. The wireless communication method of claim 1, wherein the UAV Flight Path Information comprises at least one of way point location or time stamp information;
wherein, preferably, the way point location comprises location coordinates of the UAV;
wherein, preferably, the time stamp information comprises absolute time points.

3. The wireless communication method of claim 1 or 2, wherein the UAV Height Information comprises information about a height of the UAV above a sea level.

4. A wireless communication method, for use in New Radio, NR, comprising:
receiving, by a second wireless communication node, unmanned aerial vehicle, UAV, related information of a UAV from a first wireless communication node, wherein the UAV related information comprises at least one of UAV Flight Path Information or UAV Height Information; and
transmitting, by the second wireless communication node, a response message in response to the UAV related information to the first wireless communication node,
wherein the first wireless communication node and the second wireless communication node are gNodeBs, and the UAV related information is received via an Xn interface;
wherein the UAV related information is received via a NG-RAN Configuration Update message or a Retrieve UE Context Request message;
wherein the response message is transmitted via a NG-RAN Configuration Acknowledge message or a Retrieve UE Context Response message.

5. The wireless communication method of claim 4, wherein the UAV Flight Path Information comprises at least one of way point location or time stamp information;
wherein, preferably, the way point location comprises location coordinates of the UAV;
wherein, preferably, the time stamp information comprises absolute time points.

6. The wireless communication method of claim 4 or 5, wherein the UAV Height Information comprises information about a height of the UAV above a sea level.

7. A wireless communication node, for use in New Radio, NR, comprising:
a communication unit; and
a processor configured to perform the wireless communication method according to any of claims 1 to 3.

8. A wireless communication node, for use in New Radio, NR, comprising:
a communication unit; and
a processor configured to perform the wireless communication method according to any of claims 4 to 6.

9. A computer program product comprising a computer-readable program medium code stored thereupon, the code, when executed by a processor, causing the processor to implement a wireless communication method recited in any of claims 1 to 6.

## Patentansprüche

1. Drahtloses Kommunikationsverfahren zur Verwendung in New Radio, NR, das aufweist:
Übertragen, durch einen ersten drahtlosen Kommunikationsknoten, von auf ein unbemanntes Luftfahrzeug, UAV, bezogenen Informationen an einen zweiten drahtlosen Kommunikationsknoten, wobei die UAV-bezogenen Informationen UAV-Flugweginformationen und/oder UAV-Höheninformationen aufweisen,
wobei der erste drahtlose Kommunikationsknoten und der zweite drahtlose Kommunikationsknoten gNodeBs sind, und die UAV-bezogenen Informationen über eine Xn-Schnittstelle an den zweiten drahtlosen Kommunikationsknoten übertragen werden;
wobei die UAV-bezogenen Informationen an den zweiten drahtlosen Kommunikationsknoten über eine NG-RAN-Konfigurationsaktualisierungs-Nachricht oder eine Abruf-UE-Kontextanforderungs-Nachricht übertragen werden;
wobei der erste drahtlose Kommunikationsknoten konfiguriert ist, eine Antwortnachricht vom zweiten drahtlosen Kommunikationsknoten über eine NG-RAN Konfigurationsbestätigungs-Nachricht oder eine Abruf-UE-Kontextantwort-Nachricht zu empfangen.

2. Drahtloses Kommunikationsverfahren nach Anspruch 1, wobei die UAV-Flugweginformationen einen Wegpunktort und/oder Zeitstempel-Informationen aufweisen;
wobei vorzugsweise der Wegpunktort die Ortskoordinaten des UAV aufweist;
wobei die Zeitstempelinformationen vorzugsweise absolute Zeitpunkte aufweisen.

3. Drahtloses Kommunikationsverfahren nach Anspruch 1 oder 2, wobei die UAV-Höheninformationen Informationen über die Höhe des UAV über dem Meeresspiegel aufweisen.

4. Drahtloses Kommunikationsverfahren zur Verwendung in New Radio, NR, das aufweist:
Empfangen, durch einen zweiten drahtlosen Kommunikationsknoten, von auf ein unbemanntes Luftfahrzeug, UAV, bezogenen Informationen eines UAV von einem ersten drahtlosen Kommunikationsknoten, wobei die UAV-bezogenen Informationen UAV-Flugweginformationen und/oder UAV-Höheninformationen aufweisen; und
Übertragen durch den zweiten drahtlosen Kommunikationsknoten einer Antwortnachricht als Antwort auf die UAV-bezogenen Informationen an den ersten drahtlosen Kommunikationsknoten,
wobei der erste drahtlose Kommunikationsknoten und der zweite drahtlose Kommunikationsknoten gNodeBs sind, und die UAV-bezogenen Informationen über eine Xn-Schnittstelle empfangen werden;
wobei die UAV-bezogenen Informationen über eine NG-RAN-Konfigurationsaktualisierungs-Nachricht oder eine Abruf-UE-Kontextanforderungs-Nachricht empfangen werden;
wobei die Antwortnachricht über eine NG-RAN Konfigurationsbestätigungs-Nachricht oder eine Abruf-UE-Kontextantwort-Nachricht übertragen wird.

5. Drahtloses Kommunikationsverfahren nach Anspruch 4, wobei die UAV-Flugweginformationen einen Wegpunktort und/oder Zeitstempel-Informationen aufweisen;
wobei vorzugsweise der Wegpunktort die Ortskoordinaten des UAV aufweist;
wobei die Zeitstempelinformationen vorzugsweise absolute Zeitpunkte aufweisen.

6. Drahtloses Kommunikationsverfahren nach Anspruch 4 oder 5, wobei die UAV-Höheninformationen Informationen über die Höhe des UAV über dem Meeresspiegel aufweisen.

7. Drahtloser Kommunikationsknoten zur Verwendung in New Radio, NR, der aufweist:
eine Kommunikationseinheit; und
einen Prozessor, der konfiguriert ist, um das drahtlose Kommunikationsverfahren nach einem der Ansprüche 1 bis 3 durchzuführen.

8. Drahtloser Kommunikationsknoten zur Verwendung in New Radio, NR, der aufweist:
eine Kommunikationseinheit; und
einen Prozessor, der konfiguriert ist, um das drahtlose Kommunikationsverfahren nach einem der Ansprüche 4 bis 6 durchzuführen.

9. Computerprogrammprodukt, das einen darauf gespeicherten computerlesbaren Programmmediencode aufweist, wobei der Code, wenn er von einem Prozessor ausgeführt wird, den Prozessor veranlasst, ein drahtloses Kommunikationsverfahren nach einem der Ansprüche 1 bis 6 zu implementieren.

## Revendications

1. Procédé de communication sans fil, pour une utilisation en nouvelle radio, NR, comprenant :
la transmission, par un premier nœud de communication sans fil, d'informations relatives à un véhicule aérien sans pilote, UAV, à un deuxième nœud de communication sans fil, lesdites informations relatives à l'UAV comprenant des informations de trajectoire de vol de l'UAV et/ou des informations d'altitude de l'UAV,
où le premier nœud de communication sans fil et le deuxième nœud de communication sans fil sont des gNodeB, et les informations relatives à l'UAV sont transmises au deuxième nœud de communication sans fil via une interface Xn ;
où les informations relatives à l'UAV sont transmises au deuxième nœud de communication sans fil via un message de mise à jour de configuration NG-RAN ou un message de demande d'extraction de contexte UE ;
où le premier nœud de communication sans fil est configuré pour recevoir un message de réponse du deuxième nœud de communication sans fil via un message d'accusé de réception de configuration NG-RAN ou un message de réponse d'extraction de contexte d'UE.

2. Procédé de communication sans fil selon la revendication 1, où les informations de trajectoire de vol de l'UAV comprennent des informations de localisation du point de cheminement et/ou d'horodatage ;
où, de préférence, la localisation du point de cheminement comprend les coordonnées de localisation de l'UAV ;
où, de préférence, les informations d'horodatage comprennent des points temporels absolus.

3. Procédé de communication sans fil selon la revendication 1 ou la revendication 2, où les informations d'altitude de l'UAV comprennent des informations sur l'altitude de l'UAV au-dessus du niveau de la mer.

4. Procédé de communication sans fil, pour une utilisation en nouvelle radio, NR, comprenant :
la réception, par un deuxième nœud de communication sans fil, d'informations relatives à un véhicule aérien sans pilote, UAV, provenant d'un premier nœud de communication sans fil, lesdites informations relatives à l'UAV comprenant des informations de trajectoire de vol de l'UAV et/ou des informations d'altitude de l'UAV ; et
la transmission, par le deuxième nœud de communication sans fil, d'un message de réponse aux informations relatives à l'UAV au premier nœud de communication sans fil, où le premier nœud de communication sans fil et le deuxième nœud de communication sans fil sont des gNodeB, et les informations relatives à l'UAV sont reçues via une interface Xn ;
où les informations relatives à l'UAV sont reçues via un message de mise à jour de configuration NG-RAN ou un message de demande d'extraction de contexte UE ;
où le message de réponse est transmis via un message d'accusé de réception de configuration NG-RAN ou un message de réponse d'extraction de contexte d'UE.

5. Procédé de communication sans fil selon la revendication 4, où les informations de trajectoire de vol de l'UAV comprennent des informations de localisation du point de cheminement et/ou d'horodatage ;
où, de préférence, la localisation du point de cheminement comprend les coordonnées de localisation de l'UAV ;
où, de préférence, les informations d'horodatage comprennent des points temporels absolus.

6. Procédé de communication sans fil selon la revendication 4 ou la revendication 5, où les informations d'altitude de l'UAV comprennent des informations sur l'altitude de l'UAV au-dessus du niveau de la mer.

7. Nœud de communication sans fil, pour une utilisation en Nouvelle Radio, NR, comprenant :
une unité de communication ; et
un processeur configuré pour exécuter le procédé de communication sans fil selon l'une des revendications 1 à 3.

8. Nœud de communication sans fil pour utilisation en nouvelle radio, NR, comprenant :
une unité de communication ; et
un processeur configuré pour exécuter le procédé de communication sans fil selon l'une des revendications 4 à 6.

9. Produit de programme informatique, comprenant un code de programme enregistré sur support lisible par ordinateur, dont l'exécution par un processeur entraîne la mise en œuvre par celui-ci d'un procédé de communication sans fil selon l'une des revendications 1 à 6.
